# EUROPEAN PATENT APPLICATION

(11) **EP 4 502 041 A1**
(43) Date of publication of application: **05.02.2025**
(21) Application number: 23780552.8
(22) Date of filing: 28.03.2023
(51) Int. Cl.: C08L 23/04, C08F 10/02, C08K 7/06, C08K 9/00, C08L 23/26

(54) **ETHYLENE-BASED POLYMER COMPOSITION AND USE THEREOF**

(30) Priority: 31.03.2022 JP 2022059750
(71) Applicant: Mitsui Chemicals, Inc., Tokyo 104-0028 (JP)
(72) Inventor: KOMATSU, Chihiro, Sodegaura-shi, Chiba 299-0265 (JP); FUJISAWA, Mitsuru, Sodegaura-shi, Chiba 299-0265 (JP); HOTANI, Yohei, Sodegaura-shi, Chiba 299-0265 (JP)
(74) Representative: J A Kemp LLP
(86) International application number: PCT/JP2023/012569
(87) International publication number: WO 2023/190543

(57) **Abstract**

An ethylene-based polymer composition of the present invention contains 100 parts by mass of an ethylene-based polymer component (A) having an intrinsic viscosity [η] measured in a decalin solvent at 135°C of 1.5 to 10 dl/g and a density of 930 to 980 kg/m³ and 1 to 100 parts by mass of carbon fibers (B), and the ethylene-based polymer component (A) contains an ultra-high-molecular-weight ethylene-based polymer (a1) having an intrinsic viscosity [η] measured in a decalin solvent at 135°C of 10 to 40 dl/g.

## Description

### Technical Field

The present invention relates to an ethylene-based polymer composition and a use thereof.

### Background Art

Polyethylene resins are easy to mold, have a variety of excellent physical properties, are economical and are thus in wide use as molding materials. For example, Patent Literature 1 discloses a high-density polyethylene resin composition containing a high-density polyethylene resin and a layered silicate and, for example, an injection molded product of this composition. In addition, Patent Literature 2 discloses a resin composition composed of a polyolefin resin (such as, a polyethylene resin or a polypropylene resin), a multi-walled carbon nanotube and an inorganic filler and a molded product of this composition.

Incidentally, Patent Literature 3 discloses an ethylene-based polymer containing a ultra-high-molecular-weight polyethylene and a low-molecular-weight or high-molecular-weight polyethylene and an ethylene-based polymer composition containing a carbon nanotube and describes that this resin composition has low surface resistivity and volume resistivity and has favorable thermal conductivity and a molded body obtained from the ethylene-based polymer composition has favorable sliding properties and has stiffness.

### Citation List

### Patent Literature

[Patent Literature 1] JP2014-19733A
[Patent Literature 2] JP2010-196012A
[Patent Literature 3] WO2022/038941

### Summary of Invention

### Technical Problem

However, conventional ethylene-based polymer compositions containing an inorganic filler or a carbon nanotube do not always have sufficient moldability, and there has been a room for improvement from the viewpoint of obtaining a molded body that is excellent in terms of stiffness, conductivity, wear resistance and heat resistance.

Therefore, an object of the present invention is to provide an ethylene-based polymer composition which has excellent moldability and from which a molded body that is excellent in terms of stiffness, conductivity, wear resistance and heat resistance can be obtained and a molded body thereof.

### Solution to Problem

An example of the present invention will be shown.
[1] An ethylene-based polymer composition comprising: 100 parts by mass of an ethylene-based polymer component (A) having an intrinsic viscosity [η] measured in a decalin solvent at 135°C of 1.5 to 10 dl/g and a density of 930 to 980 kg/m³; and 1 to 100 parts by mass of carbon fibers (B),
   wherein the ethylene-based polymer component (A) contains an ultra-high-molecular-weight ethylene-based polymer (a1) having an intrinsic viscosity [η] measured in a decalin solvent at 135°C of 10 to 40 dl/g.
[2] The ethylene-based polymer composition according to [1], wherein the ethylene-based polymer component (A) contains a low-molecular-weight or high-molecular-weight ethylene-based polymer (a2) having an intrinsic viscosity [η] measured in a decalin solvent at 135°C of 0.1 to 9 dl/g.
[3] The ethylene-based polymer composition according to [2], wherein the ethylene-based polymer component (A) contains 10 to 90 mass% of an ethylene-based polymer component (AI) and 90 to 10 mass% of an ethylene-based polymer component (AII) (based on 100 mass% of a total amount of the component (AI) and the component (AII)),
   the ethylene-based polymer component (AI) is a multistage polymer containing more than 35 mass% and 90 mass% or less of the ultra-high-molecular-weight ethylene-based polymer (a1) and 10 mass% or more and less than 65 mass% of the low-molecular-weight or high-molecular-weight ethylene-based polymer (a2) (based on 100 mass% of a total amount of the polymer (a1) and the polymer (a2)), and
   the ethylene-based polymer component (AII) contains an ethylene-based polymer (a3) having an intrinsic viscosity [η] measured in a decalin solvent at 135°C of 0.1 to 2.9 dl/g.
[4] The ethylene-based polymer composition according to [3], wherein the ethylene-based polymer component (AI) is obtained by a multistage polymerization method comprising a step of generating the ultra-high-molecular-weight ethylene-based polymer (a1) and a step of generating the low-molecular-weight or high-molecular-weight ethylene-based polymer (a2).
[5] The ethylene-based polymer composition according to any one of [1] to [4], wherein the carbon fibers (B) are surface-treated carbon fibers.
[6] The ethylene-based polymer composition according to [5], wherein a surface treatment of the carbon fibers (B) is a sizing treatment using an olefin-based polymer, a urethane-based polymer, a nylon-based polymer or an epoxy-based polymer.
[7] The ethylene-based polymer composition according to any one of [1] to [6], wherein an average fiber length of the carbon fibers (B) extracted from the ethylene-based polymer composition is 100 um or longer and 400 um or shorter.
[8] The ethylene-based polymer composition according to any one of [1] to [7], wherein a proportion of a carbon fiber having a fiber length of 100 um or longer and 300 um or shorter in the carbon fibers (B) extracted from the ethylene-based polymer composition is 30% or more.
[9] The ethylene-based polymer composition according to any one of [1] to [8], further comprising a modified olefin-based polymer (C).
[10] The ethylene-based polymer composition according to any one of [1] to [9], wherein a content of the carbon fibers (B) based on 100 parts by mass of the ethylene-based polymer component (A) is 20 to 60 parts by mass.
[11] A molded body comprising the ethylene-based polymer composition according to any one of [1] to [10].
[12] The molded body according to [11], wherein a proportion of a carbon fiber having an acicular ratio of 1.5 or more in the carbon fibers (B) that are contained in the molded body is 30% or more.
[13] The molded body according to [11] or [12], wherein shrinkage rates of the molded body in a length direction and in a width direction are both 2.0% or less.
[14] The molded body according to any one of [11] to [13], wherein a bending elastic modulus of the molded body is 5000 MPa or more.
[15] The molded body according to any one of [11] to [14], wherein the number of repetitions when a displacement amount reaches 8 mm in a vibration fatigue test (35 MPa) of the molded body is 1500 times or more.
[16] The molded body according to any one of [11] to [15] that is an injection molded body.
[17] The molded body according to any one of [11] to [16] that is a covering material or a sliding material.

### Advantageous Effects of Invention

According to the present invention, it is possible to provide an ethylene-based polymer composition which has excellent moldability and from which a molded body that is excellent in terms of stiffness, conductivity, wear resistance and heat resistance can be obtained and a molded body thereof.

### Brief Description of Drawing

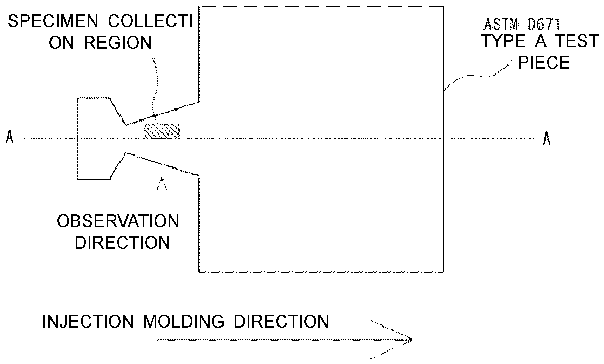

Fig. 1 is a schematic view for describing a place where an observation sample is collected from an ASTM D671 type A test piece (molded body) at the time of evaluating an orientation in Examples and an observation surface of the observation sample.

### Description of Embodiments

Hereafter, the present invention will be described in detail. In the present specification, a numerical range expressed with "to" means a range including numerical values placed before and after "to" as a lower limit value and an upper limit value, respectively.

An ethylene-based polymer composition according to the present invention (hereinafter, also simply referred to as "the composition of the present invention") contains 100 parts by mass of an ethylene-based polymer component (A) having an intrinsic viscosity [η] of 1.5 to 10 dl/g and a density of 930 to 980 kg/m³ and 1 to 100 parts by mass of carbon fibers (B), and the ethylene-based polymer component (A) contains an ultra-high-molecular-weight ethylene-based polymer (a1) having an intrinsic viscosity [η] of 10 to 40 dl/g.

The intrinsic viscosity [η] in the present invention is an intrinsic viscosity [η] measured in a decalin solvent at 135°C unless particularly otherwise described.

### <Ethylene-Based Polymer Component (A)>

The ethylene-based polymer component (A) is an ethylene homopolymer or a copolymer of ethylene and an α-olefin and a polymer mainly containing ethylene that is generally referred to as high-pressure low-density polyethylene (HP-LDPE), linear low-density polyethylene (LLDPE), medium-density polyethylene (MDPE), high-density polyethylene (HDPE) or an ultra-high-molecular-weight ethylene-based polymer.

In the case of being a copolymer, the ethylene-based polymer component (A) may be a random copolymer or a block copolymer.

The α-olefin that is copolymerized with ethylene is preferably an α-olefin having 3 to 20 carbon atoms, and specific examples thereof include propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-nonadecene, 1-eicosene, 9-methyl-1-decene, 11-methyl-1-dodecene and 12-ethyl-1-tetradecene. These α-olefins can be used singly or in combinations of two or more thereof.

The ethylene-based polymer component (A) may be one homopolymer or a composition (mixture) of two or more ethylene-based polymers.

The intrinsic viscosity [η] of the ethylene-based polymer component (A) is 1.5 to 10 dl/g, preferably 2.0 to 8.0 dl/g and more preferably 2.5 to 7.0 dl/g. When the ethylene-based polymer component (A) has an intrinsic viscosity [η] within the above-described range, it is possible to obtain a molded body having excellent balance of characteristics such as wear resistance, self-lubricity, impact strength, chemical resistance, appearance and moldability, from the composition of the present invention.

The density (measured according to ASTM D1505) of the ethylene-based polymer component (A) is 930 to 980 kg/m³ and preferably 940 to 970 kg/m³. When the ethylene-based polymer component (A) has a density within the above-described range, a molded body having excellent wear resistance and flexibility can be obtained.

The ethylene-based polymer component (A) contains an ultra-high-molecular-weight ethylene-based polymer (a1) having an intrinsic viscosity [η] of 10 to 40 dl/g (hereinafter, also referred to as "polymer (a1)"). Since the ethylene-based polymer component (A) contains the polymer (a1), a molded body having excellent wear resistance, self-lubricity, impact strength or chemical resistance can be obtained from the composition of the present invention.

The intrinsic viscosity [η] of the polymer (a1) is preferably 15 to 35 dl/g and more preferably 20 to 35 dl/g.

The ethylene-based polymer component (A) may contain a low-molecular-weight or high-molecular-weight ethylene-based polymer (a2) having an intrinsic viscosity [η] of 0.1 to 9 dl/g (hereinafter, also referred to as "polymer (a2)"). The polymer (a2) may be wax.

The intrinsic viscosity [η] of the polymer (a2) is preferably 0.1 to 5 dl/g, more preferably 0.5 to 3.0 dl/g and still more preferably 1.0 to 2.5 dl/g.

As the ethylene-based polymer component (A), the composition of the present invention preferably contains
10 to 90 mass% of an ethylene-based polymer component (AI) that is a multistage polymer containing more than 35 mass% and 90 mass% or less of the ultra-high-molecular-weight ethylene-based polymer (a1) and
10 mass% or more and less than 65 mass% of the low-molecular-weight or high-molecular-weight ethylene-based polymer (a2) (the total amount of the polymer (a1) and the polymer (a2) is set to 100 mass%), and
90 to 10 mass% of an ethylene-based polymer component (AII) having an intrinsic viscosity [η] of 0.1 to 2.9 dl/g (based on 100 mass% of the total amount of the component (AI) and the component (AII)).

The ethylene-based polymer component (AI) can be preferably obtained by a multistage polymerization method including a step of generating the ultra-high-molecular-weight ethylene-based polymer (a1) and a step of generating the low-molecular-weight or high-molecular-weight ethylene-based polymer (a2).

In the multistage polymerization method, normally, the polymer (a1) is generated in the first stage, and the polymer (a2) is then generated in the second stage.

The proportion of the ethylene-based polymer component (AI) is preferably 15 to 90 mass%, more preferably 20 to 80 mass, still more preferably 26.7 to 49 mass%, and the proportion of the ethylene-based polymer component (AII) is preferably 85 to 10 mass%, more preferably 80 to 20 mass%, still more preferably 73.3 to 51 mass% (based on 100 mass% of the total amount of the component (AI) and the component (AII)).

### <<Ethylene-Based Polymer Component (AI)>>

The ultra-high-molecular-weight ethylene-based polymer (a1) that configures the ethylene-based polymer component (AI) is normally obtained by the first-stage polymerization in the multistage polymerization method.

The low-molecular-weight or high-molecular-weight ethylene-based polymer (a2) that configures the ethylene-based polymer component (AI) is normally obtained by the second-stage polymerization after the polymerization of the polymer (a1) in the multistage polymerization method.

The ethylene-based polymer component (AI) can be produced by polymerizing ethylene and an α-olefin as desired in multiple stages in the presence of a catalyst, and the multiple stages of polymerization can be performed by the same method as a polymerization method described in JP1990-289636A.

In addition, when the polymer (a1) is polymerized and the polymer (a2) is then polymerized, the ethylene-based polymer component (AI) has excellent compatibility with the ethylene-based polymer component (AII). As a result, the ultra-high-molecular-weight ethylene-based polymer (a1) uniformly disperses in the composition of the present invention, and the ultra-high-molecular-weight ethylene-based polymer (a1) bonds to the ethylene-based polymer component (AII). That is, the interface strength between the polymer (a1) and the ethylene-based polymer component (AII) becomes high. Therefore, the composition of the present invention contains the component (AI) and the component (AII) and thereby has excellent balance of characteristics such as wear resistance, self-lubricity, impact strength, chemical resistance, appearance and moldability, particularly, excellent balance of wear resistance, appearance and moldability.

The ethylene-based polymer component (AI) contains the ultra-high-molecular-weight ethylene-based polymer (a1) in an amount of preferably more than 35 mass% and 90 mass% or less, more preferably more than 40 mass% and 80 mass% or less and still more preferably 41 to 75 mass% and contains the low-molecular-weight or high-molecular-weight ethylene-based polymer (a2) in an amount of preferably 10 mass% or more and less than 65 mass%, more preferably 20 mass% or more and less than 60 mass% and still more preferably 25 to 59 mass%.

When the proportions of the polymer (a1) and the polymer (a2) are made to be within the above-described ranges, the compatibility between the component (AI) and the component (AII) improves, and the composition of the present invention is particularly excellent in terms of wear resistance or appearance.

The ethylene-based polymer component (AI) substantially contains only the ultra-high-molecular-weight ethylene-based polymer (polymer (a1)) and the low-molecular-weight or high-molecular-weight ethylene-based polymer (polymer (a2)).

To the component (AI), an additive that is added to normal polyolefins (for example, a stabilizer such as a heat stabilizer or a weather stabilizer, a crosslinking agent, a crosslinking aid, an antistatic agent, a slip agent, an anti-blocking agent, an antifogging agent, a lubricant, a dye, a mineral oil-based softener, a petroleum resin or wax) may be added, and the composition of the present invention may contain the additive added to the component (AI) to an extent that the effect of the present invention is not impaired.

The density (measured according to ASTM D1505) of the ethylene-based polymer component (AI) is normally 930 to 980 kg/m³ and preferably 940 to 970 kg/m³.

The intrinsic viscosity [η] of the ethylene-based polymer component (AI) is normally 3.0 to 10.0 dl/g, preferably 3.0 to 8.0 dl/g and more preferably 3.0 to 7.0 dl/g.

When the ethylene-based polymer component (AI) has the above-described density, the dynamic friction coefficient of a molded body becomes small, and the molded body having excellent self-lubricity can be then obtained.

In addition, when the ethylene-based polymer component (AI) has an intrinsic viscosity [η] within the above-described range, the dispersion state of the ethylene-based polymer component (AI) and the ethylene-based polymer component (AII) becomes favorable.

That is, since the polymer (a2) that is contained in the ethylene-based polymer component (AI) and the ethylene-based polymer component (AII) that is melt-blended with, for example, an extruder finely disperse with each other, whereby the dispersion state becomes uniform, the use of the ethylene-based polymer component (AI) makes it possible to obtain a molded body that is excellent in terms of, for example, wear resistance, self-lubricity, impact strength, chemical resistance, appearance and moldability from the composition of the present invention.

### <<Ethylene-Based Polymer Component (AII)>>

The ethylene-based polymer component (AII) preferably contains an ethylene-based polymer (a3) having an intrinsic viscosity [η] of 0.1 to 2.9 dl/g.

Examples of the ethylene-based polymer (a3) include high-pressure polyethylene (HP-LDPE), linear low-density polyethylene (LLDPE), medium-density polyethylene (MDPE), high-density polyethylene (HDPE), an ethylene/α-olefin copolymer, an ethylene/vinyl alcohol copolymer, an ethylene/vinyl acetate copolymer, an ethylene/vinyl acetate copolymer saponified product, an ethylene/(meth)acrylic acid copolymer and an ethylene/α-olefin/diene (triene, polyene) terpolymer. Here, examples of the α-olefin include propylene, 1-butene, 1-pentene, 1-hexene, 1-octene, 1-decene, 1-dodecene, 4-methyl-1-pentene and 3-methyl-1-pentene which have 3 to 20 carbon atoms. In addition, examples of the diene (triene, polyene) include 5-ethylidene-2-norbornene and vinylnorbornene containing a conjugated or non-conjugated diene, triene or polyene.

The ethylene-based polymer component (AII) may be a single ethylene-based polymer (a3), may be a composition of two or more ethylene-based polymers (a3) or may be a composition of the ethylene-based polymer (a3) and a polyolefin (such as polypropylene or polybutene). In addition, the ethylene-based polymer component (AII) may be wax.

Among them, the ethylene-based polymer (a3) is preferably high-density polyethylene (HDPE) or low-density polyethylene (LDPE) and more preferably high-density polyethylene (HDPE).

The density (measured according to ASTM D1505) of the ethylene-based polymer (a3) is normally 820 to 980 kg/m³, preferably 930 to 980 kg/m³ and more preferably 950 to 980 kg/m³.

The intrinsic viscosity [η] of the ethylene-based polymer (a3) is normally 0.1 to 2.9 dl/g, preferably 0.3 to 2.8 dl/g, more preferably 0.5 to 2.5 dl/g and still more preferably 1.0 to 2.5 dl/g.

The ethylene-based polymer component (AII) contains the ethylene-based polymer (a3) and thus favorably disperses when being mixed with the ethylene-based polymer component (AI). That is, when melt-blended with, for example, an extruder, the ethylene-based polymer component (AII) and the low-molecular-weight or high-molecular-weight ethylene-based polymer (a2) that is contained in the ethylene-based polymer component (AI) finely disperse with each other, whereby the dispersion state becomes uniform. Therefore, when the ethylene-based polymer component (AI) and the ethylene-based polymer component (AII) are used as the ethylene-based polymer component (A), a molded body that is excellent in terms of, for example, wear resistance, self-lubricity, impact strength, chemical resistance, appearance, flexibility or moldability can be obtained.

To the component (AII), an additive that is added to normal polyolefins (for example, a stabilizer such as a heat stabilizer or a weather stabilizer, a crosslinking agent, a crosslinking aid, an antistatic agent, a slip agent, an anti-blocking agent, an antifogging agent, a lubricant, a dye, a mineral oil-based softener, a petroleum resin or wax) may be added, and the composition of the present invention may contain the additive added to the component (AII) to an extent that the effect of the present invention is not impaired.

### <Carbon Fibers (B)>

The carbon fibers (B) are not particularly limited, a variety of well-known carbon fibers can be used, and examples thereof include carbon fibers such as polyacrylnitrile-based carbon fibers, rayon-based carbon fibers, pitch-based carbon fibers, polyvinyl alcohol-based carbon fibers, regenerated cellulose-based carbon fibers, pitch-based carbon fibers produced from mesophase pitch. These may be used singly or two or more thereof may be jointly used.

The carbon fibers (B) may be general-purpose fibers or high-strength fibers. In addition, the carbon fibers (B) may be long fibers, short fibers, chopped fibers or recycled fibers.

The carbon fibers (B) are preferably surface-treated carbon fibers. As a method for the surface treatment of the carbon fibers, a well-known method that is generally used may be used, and examples thereof include a method in which an electrolytic surface treatment is performed on the carbon fibers in an acidic or alkaline aqueous solution to impart a functional group to the surfaces of the carbon fibers and a method in which the surface is treated using a sizing agent. Between them, a sizing treatment using, for example, an olefin-based polymer, an epoxy-based polymer, a nylon-based polymer or an urethane-based polymer is preferable.

The average length of the carbon fibers (B), that is, the average fiber length is preferably 0.1 mm or longer and 15.0 mm or shorter, more preferably 0.3 mm or longer and 13.0 mm or shorter and still more preferably 0.5 mm or longer and 13.0 mm or shorter. In a case where the average fiber length is equal to or longer than the above-described lower limit, there is a tendency that an effect of the carbon fibers that reinforce mechanical properties is sufficiently developed. In a case where the average fiber length is equal to or shorter than the above-described upper limit, there is a tendency that the carbon fibers in the ethylene-based polymer composition disperse, whereby the appearance of a molded body becomes favorable.

The average fiber length of the carbon fibers (B) extracted from the composition of the present invention is preferably 100 µ or longer and 400 um or shorter, more preferably 120 um or longer and 380 um or shorter and still more preferably 150 um or longer and 360 um or shorter. When the average fiber length of the carbon fibers (B) extracted from the composition of the present invention is within the above-described range, workability during the fabrication of a molded body becomes favorable. On the other hand, when the average fiber length is outside the above-described range, it becomes difficult to uniformly knead the carbon fibers and a resin during molding, which may cause deterioration of the physical properties of the composition and a molded body in some cases.

In addition, the proportion of a carbon fiber having a fiber length of 100 um or longer and 300 um or shorter in the carbon fibers (B) extracted from the composition of the present invention is preferably 30% or more, more preferably 35% to 99% and still more preferably 40% to 98%. When the proportion of the carbon fiber having a fiber length of 100 um or longer and 300 um or shorter is within the above-described range, it becomes possible to increase the mechanical strength, and a molded body having excellent wear resistance can be obtained.

The fiber lengths and average fiber length of the carbon fibers (B) extracted from the composition of the present invention can be obtained by, for example, a method to be described in the following examples.

The average diameter of the carbon fibers (B) is preferably 0.5 um or longer and 30 um or shorter, more preferably 1 um or longer and 21 um or shorter and still more preferably 1 um or longer and 19 um or shorter. In a case where the average diameter of the carbon fibers is equal to or longer than the above-described lower limit, it becomes difficult for the carbon fiber to break during molding, and additionally, there is a tendency that the impact strength of a molded body to be obtained becomes high. In a case where the average diameter of the carbon fibers is equal to or shorter than the above-described upper limit, the appearance of a molded body becomes favorable, and additionally, there is a tendency that an effect of sufficiently reinforcing mechanical properties such as stiffness and heat resistance of a molded body can be obtained without decreasing the aspect ratios of the carbon fibers.

In the composition of the present invention, the content of the carbon fibers (B) is 1 to 100 parts by mass, preferably 4 to 70 parts by mass, more preferably 7 to 65 parts by mass, still more preferably 10 to 60 parts by mass and particularly preferably 20 to 60 parts by mass when the content of the ethylene-based polymer component (A) is set to 100 parts by mass. When the content of the carbon fibers (B) is within the above-described range, the moldability of the composition of the present invention is excellent, it is possible to obtain a molded body having excellent in terms of stiffness, conductivity, wear resistance and heat resistance, from the composition of the present invention.

Examples of a commercially available product of the carbon fiber (B) include TENAX (HT P802 (polyolefin-based polymer sizing), HT C605 (nylon-based polymer sizing) and HT C503 (urethane-based polymer sizing)) manufactured by Teijin Limited, TORAYCA cut fiber T008-006 (epoxy-based polymer sizing) manufactured by Toray Industries, Inc. and EX-1LC (epoxy-based polymer sizing) from Nippon Polymer Sangyo Co., Ltd.

### <Modified-Olefin-Based Polymer (C)>

The composition of the present invention may contain a modified olefin-based polymer (C).

The modified olefin-based polymer (C) is used as, for example, a compatibilizer for enhancing the compatibility between the ethylene-based polymer component (A) and the carbon fibers (B).

The modified olefin-based polymer (C) is not particularly limited, and examples thereof include acidmodified products of ethylene and a homopolymer or copolymer of an α-olefin having 3 to 12 carbon atoms (for example, maleic anhydride modified products), air oxides or styrenemodified products. Among these, modified products of a polymer selected from the group consisting of ethylene-based polymers (ethylene homopolymers and copolymers of ethylene and at least one α-olefin selected from α-olefins having 3 to 12 carbon atoms) and propylene-based polymers (propylene homopolymers and copolymers of propylene and at least one α-olefin selected from α-olefins having 4 to 12 carbon atoms) are preferable.

Here, examples of the α-olefins (the α-olefins having 3 to 12 carbon atoms or the α-olefins having 4 to 12 carbon atoms) include propylene, 1-butene, 1-pentene, 1-hexene, 4-methyl-1-pentene and 1-octene.

The modified olefin-based polymer (C) is preferably a modified ethylene-based polymer.

The modified olefin-based polymer (C) is more preferably a modified ethylene-based polymer (c11) that is the following ethylene-based polymer (c1) that has been graft-modified with an unsaturated carboxylic acid or a derivative thereof.

Regarding the ethylene-based polymer (c1), it is preferable that the density is 930 to 975 kg/m³ and the melt flow rate (MFR) measured based on ASTM D1238 at 190°C under a load of 2.16 kg is 0.1 to 10 g/10 minutes or the melt flow rate (MFR) measured based on ASTM D1238 at 190°C under a load of 10 kg is 0.1 to 20 g/10 minutes.

The density of the ethylene-based polymer (c1) is preferably 940 to 970 kg/m³. When the density is within the above-described range, the compatibility between the ethylene-based polymer component (A) and the carbon fibers (B) is high.

The melt flow rate (measured according to ASTM D1238 at 190°C under a load of 2.16 kg) of the ethylene-based polymer (c1) is preferably 0.2 to 8 g/10 minutes, more preferably 0.5 to 6 g/10 minutes and still more preferably 0.5 to 3 g/10 minutes. The melt flow rate (measured according to ASTM D1238 at 190°C under a load of 10 kg) of the ethylene-based polymer (c1) is preferably 0.1 to 15 g/10 minutes, more preferably 0.1 to 10 kg/10 minutes and still more preferably 0.1 to 8 g/10 minutes. When the melt flow rate is within the above-described range, the compatibility between the ethylene-based polymer component (A) and the carbon fibers (B) is high.

The amount of the unsaturated carboxylic acid or derivative thereof grafted in the modified ethylene-based polymer (c11) is normally 0.01 to 10 mass% and preferably 0.02 to 10 mass%. When the amount grafted is within the above-described range, the compatibility between the ethylene-based polymer component (A) and the carbon fibers (B) is high.

Examples of the unsaturated carboxylic acid or derivative thereof include unsaturated carboxylic acids such as (meth)acrylic acid, maleic acid, fumaric acid, tetrahydrophthalic acid, itaconic acid, citraconic acid, crotonic acid, isocrotonic acid and nadic acid (endocisbicyclo[2,2,1]hept-5-ene-dicarboxylic acid) and derivatives thereof, for example, acid halides, amide-imides, anhydrides and esters. Specific examples of the derivatives include maleyl chloride, maleimide, maleic anhydride, citraconic anhydride, and esters and half-esters such as monomethyl maleate, dimethyl maleate, glycidyl maleate, methyl (meth)acrylate, ethyl (meth)acrylate, glycidyl (meth)acrylate, maleic acid monoethyl ester, maleic acid diethyl ester, fumaric acid monomethyl ester, fumaric acid dimethyl ester, itaconic acid monomethyl ester, and itaconic acid diethyl ester. Among these, unsaturated dicarboxylic acids and acid anhydrides thereof are preferable, and maleic acid, nadic acid and acid anhydrides thereof are more preferable.

The modified ethylene-based polymer (c11) can be produced by a variety of well-known methods. For example, the modified ethylene-based polymer (c11) can be made by a method in which an ethylene-based polymer is dissolved in an organic solvent, an unsaturated carboxylic acid or a derivative thereof and a radical initiator such as an organic peroxide as necessary are then added to the obtained solution and the components are reacted at a temperature of normally 60°C to 350°C, preferably 80°C to 190°C, for 0.5 to 15 hours, preferably 1 to 10 hours, or a method in which an ethylene-based polymer, an unsaturated carboxylic acid or a derivative thereof and a radical initiator such as an organic peroxide as necessary are added in the absence of a solvent using, for example, an extruder and the components are reacted at normally the melting point of the ethylene-based polymer or higher, preferably 160°C to 350°C, for 0.5 to 10 minutes.

The ethylene-based polymer before modification can be produced by a well-known method, for example, a high-pressure method or a low-pressure method in which a Ziegler-type Tibased catalyst, Co-based catalyst or metallocene-based catalyst is used.

The ethylene-based polymer (c1) may contain one ethylene-based polymer and may contain two or more ethylene-based polymers.

In a case where the ethylene-based polymer (c1) contains two or more ethylene-based polymers, the two or more ethylene-based polymers each satisfy the requirements of the density and melt flow rate of the ethylene-based polymer (c1).

In a case where the composition of the present invention contains the modified olefin-based polymer (C), the content of the modified olefin-based polymer (C) in the composition of the present invention is preferably 0.1 to 10 parts by mass, more preferably 0.3 to 8 parts by mass and still more preferably 0.5 to 7 parts by mass when the content of the ethylene-based polymer component (A) is set to 100 parts by mass. When the content of the modified olefin-based polymer (C) is within the above-described range, it is possible to make the ethylene-based polymer component (A) and the carbon fibers (B) favorably compatible with each other.

### <Optional Component>

The ethylene-based polymer composition of the present invention may contain, in addition to the ethylene-based polymer component (A), the carbon fibers (B) and the modified olefin-based polymer (C), a variety of additives that are normally used for polyolefins such as an inorganic filler other than the carbon fibers (B), a heat stabilizer, a weather stabilizer, an ultraviolet absorber, a light stabilizer, wax, a lubricant, a slip agent, a nucleating agent, an anti-blocking agent, an antistatic agent, an antifogging agent, a dye, a dispersant, a flame retardant, a combustion aid, a plasticizer and a compatibilizer, an impact resistance modifier such as an elastomer or a polymer such as a polyamide as necessary to an extent that the effect of the present invention is not impaired.

In a case where the ethylene-based polymer composition of the present invention contains the above-described additive or polymer, the amount thereof is not particularly limited and is, for example, within a range of 0.01 to 30 mass%.

As the additive, wax is preferable. Examples of the wax include polyethylene-based wax (excluding wax that corresponds to the ethylene-based polymer component (AII)) and polypropylene-based wax.

When the ethylene-based polymer composition of the present invention contains the wax, since the agglomeration of the carbon fibers (B) in the ethylene-based polymer component (A) is suppressed, it is considered that kneading becomes easy and the carbon fibers (B) easily disperse in the ethylene-based polymer component (A).

In a case where the ethylene-based polymer composition of the present invention contains the wax, the amount thereof is preferably within a range of 0.01 to 10 mass% based on the total amount of the composition.

The MFR of the ethylene-based polymer composition of the present invention measured according to JIS K 7210-1: 2014 at 190°C under a load of 10 kg is preferably 0.01 to 20 g/10 minutes and more preferably 0.01 to 10 g/10 minutes.

### <Method for Producing Ethylene-Based Polymer Composition>

The ethylene-based polymer composition of the present invention can be obtained by mixing the ethylene-based polymer component (A), the carbon fibers (B), optionally the modified olefin-based polymer (C) and optionally the optional component by a well-known conventional method, for example, dry-blending each component, subsequently, melt-kneading the component with a single or twin screw extruder, extruding the component in a strand shape and granulating the component into pellets.

The carbon fibers (B) may be used in a masterbatch form by being mixed with a polymer component such as the ethylene-based polymer component (A) in advance.

### <Molded Body>

A molded body of the present invention contains the ethylene-based polymer composition. Specific examples of a production method (molding method) of the molded body include well-known conventional methods for molding a polyolefin, well-known heat molding methods such as extrusion molding, injection molding, film molding, inflation molding, blow molding, extrusion blow molding, injection blow molding, press molding, vacuum molding, powder slush molding, calendar molding and foam molding. Preferably, when the ethylene-based polymer composition is worked by injection molding, it is possible to obtain a molded body containing the ethylene-based polymer composition.

The molded body may be a molded body formed from the ethylene-based polymer composition or may be a molded body having a part formed from the ethylene-based polymer composition, for example, a surface layer.

The proportion of a carbon fiber having an acicular ratio of 1.5 or more in the carbon fibers (B) that are contained in the molded body of the present invention is preferably 30% or more, more preferably 30% to 70%, still more preferably 31% to 65% and particularly preferably 32% to 60%. When the proportion of the carbon fiber having an acicular ratio of 1.5 or more is within the above-described range, it is possible to increase the mechanical strength of the molded body, and a molded body having excellent stiffness or fatigue resistance can be obtained. The proportion of the carbon fiber having an acicular ratio of 1.5 or more can be obtained by a method to be described in the following examples.

The shrinkage rates of the molded body of the present invention in the length direction and in the width direction are both preferably 2.0% or less, more preferably 1.5% or less and particularly preferably 0.05% to 1.0%. The shrinkage rates can be obtained by a method to be described in the following examples.

The bending elastic modulus of the molded body of the present invention is preferably 5000 MPa or more, more preferably 6000 to 20000 MPa and still more preferably 7000 to 15000 MPa. The bending elastic modulus can be obtained by a method to be described in the following examples.

The number of repetitions when the displacement amount reaches 8 mm in a vibration fatigue test (35 MPa) of the molded body of the present invention is preferably 1500 times or more, more preferably 2000 times or more and still more preferably 5000 times or more. The upper limit of the above-described number of repetitions is preferably as large as possible, is thus not particularly limited and is preferably 10000000 times, more preferably 1000000 times and still more preferably 500000 times. The number of repetitions can be obtained by a method to be described in the following examples.

The molded body is used in a wide range of uses including, for example, daily use items, household items for, for example, recreation uses, general industrial uses and industrial items. Specific examples of the molded body include home appliance material parts, communication equipment parts, electrical parts, electronic parts, automobile parts, other vehicle parts, ships, aircraft materials, mechanical mechanism parts, building materialrelated members, civil engineering members, agricultural materials, electric tool parts, food containers, films, sheets and fibers.

The molded body of the present invention can be used in a wide range of well-known conventional polyethylene uses, has particularly excellent balance of characteristics such as wear resistance, stiffness, self-lubricity, impact strength and thin-wall molding and is thus used, as uses in which these characteristics are required, in, for example, metal covering materials (laminated) for steel pipes, electric wires and automobile sliding door rails; a variety of rubber covering materials (laminated) for pressure-resistant rubber hoses, gaskets for automobile doors, gaskets for clean room doors, automobile glass run channels and automobile weather strips; sliding materials such as sliding materials for linings such as hoppers and chutes, gears, bearings, rollers, tape reels, a variety of guide rails, elevator rail guides and a variety of protective liner materials.

The molded body of the present invention also has excellent conductivity and is thus capable of suppressing the chargeability of a variety of mechanical parts or sliding members and can be suitably used in uses in which conductivity and charging prevention are required.

### Examples

The present invention will be more specifically described below based on Examples, but the present invention is not limited to these Examples.

### [Measurement Methods]

Methods for measuring the physical properties of polymers used in, for example, Examples, compositions obtained in, for example, Examples and molded bodies fabricated using the compositions are as described below.

### [Intrinsic Viscosity [η]]

The intrinsic viscosity was measured in decalin at 135°C.

### [Density]

The density of an ethylene-based polymer component (A) was measured by a density gradient method according to ASTM D1505.

The densities of the compositions obtained in Examples or Comparative Examples were measured at 23°C in water by hydrostatic weighing according to JIS Z8807: 2012.

### [Fiber Analysis of Carbon Fibers (B) That Were Extracted from Ethylene-Based Polymer Composition]

### <Pretreatment>

Pellet-like compositions obtained in Examples and Comparative Examples were heated in an electric furnace at 500°C in the atmosphere for 30 minutes.

### <Image Analysis of Carbon Fibers (B)>

A prepared slide obtained by taking out a part of ash obtained by the pretreatment to a glass slide, expanding the ash with oil and covering the glass slide with a cover glass was used as an observation sample. The sample was observed through a reflection bright-field image using "stereo microscope SZX16" manufactured by Olympus Corporation at a lens magnification of four times. A field including 100 um or longer fibers was selected from the observation field, an image was acquired and then analyzed with image analysis software ("Win ROOF 2018" manufactured by MITANI Corporation), and the fiber lengths and fiber count of carbon fibers (B) were obtained.

### <Average Fiber Length of Carbon Fibers (B)>

The average fiber length of the carbon fibers that were contained in the composition was calculated based on the results obtained by the image analysis.

### <Proportion of Carbon Fibers (B) Having Fiber Length of 100 to 300 um>

Based on the results obtained by the image analysis, the proportion of fibers having a fiber length of 100 to 300 um in all of the analyzed fibers was calculated.

### [Orientation]

### <Fabrication of ASTM D671 Type A Test Piece>

The composition obtained in each of Examples and Comparative Examples was injected into a hopper portion of an "EC-75SXIII type molding machine" manufactured by Shibaura Machine Co., Ltd., melted at 230°C and injection-molded into a mold, thereby fabricating a plate-like ASTM D671 type A test piece (molded body) having such an outer form as shown in Fig. 1. During the injection molding, the temperature of the mold was set to 30°C to 50°C, the injection pressure was set to 90 to 110 MPa, and the dwelling was set to 55 to 65 MPa.

### <Fabrication of Observation Sample>

The ASTM D671 type A test piece (molded body) a schematic view of which is shown in Fig. 1 was first cut out in the same direction as the flow direction during the injection molding (injection molding direction), that is, a direction of a line A-A in Fig. 1, and a portion of a specimen collection region was cut out. Next, the cut-out portion of the specimen collection region was embedded in a resin, a cut surface in the A-A line direction was polished, furthermore, the portion was cut out in a desired thickness with a microtome, and carbon vapor deposition was performed in the end, thereby fabricating an observation sample.

### <Observation and Analysis>

A backscattered electron image of the fabricated observation sample was observed using a "scanning electron microscope S-3700N" manufactured by Hitachi High-Tech Corporation at an accelerating voltage of 10 kV and a magnification of 150 times. An observation direction of the observation sample was set to a direction in which the polished surface of the portion cut out from the molded body became the front surface as shown in Fig. 1, and the image was captured in a manner that an observation surface seen from this observation direction and the long side on the captured image became parallel to each other. Regarding the captured image, a depth of 0.7 to 0.8 mm from the surface (top surface) of the molded body was regarded as the center of the image.

After the acquisition of the image, analysis was performed with image analysis software ("Win ROOF 2018" manufactured by MITANI Corporation). Carbon fibers (CFs) were binary-extracted from the image, the acicular ratios of all of the extracted CFs were calculated, and an average value thereof was obtained. The acicular ratio was calculated from the ratio of the absolute maximum length of elliptical CFs observed and the diagonal width perpendicular to the absolute maximum length (absolute maximum length/diagonal width).

### [Conductivity (Surface Resistivity and Volume Resistivity)]

### <Fabrication of Test Piece That Was 120 mm in Length, 130 mm in Width and 3 mm in Thickness>

The composition obtained in each of Examples and Comparative Examples was injected into the hopper portion of the "EC-75SXIII type molding machine" manufactured by Shibaura Machine Co., Ltd., melted at 230°C and injection-molded into the mold, thereby fabricating a test piece that was 120 mm in length, 130 mm in width and 3 mm in thickness. The temperature of the mold was set to 50°C to 70°C, the injection pressure was set to 90 to 110 MPa, and the dwelling was set to 40 to 70 MPa.

### <Measurement of Surface Resistivity and Volume Resistivity>

The surface resistivity and the volume resistivity were measured using the test piece that was 120 mm in length, 130 mm in width and 3 mm in thickness and a "digital ultra high resistance/micro current meter 8340A" manufactured by ADC Corporation by a double ring method under conditions of 23°C, a humidity of 50%, an applied voltage of 500 V and an application time of 60 seconds.

In the above-described measurement, the surface resistivity at a level of 1.0 X 10⁷ or less was measured according to JIS K7194: 1994 using a "LORESTA-GX-MCP-T700 low resistivity meter" manufactured by Nittoseiko Analytech Co., Ltd. under conditions of an applied current of 1 mA, an application time of 10 seconds, a temperature of 23°C and a humidity of 50%.

### [Heat Resistance (Heat Distortion Temperature HDT)]

According to ISO-75-1,2, the shape of the test piece was made into a shape described in JIS K7162 1A, and the heat distortion temperature was obtained. Here, the heat distortion temperature was measured in each of a case where the bending stress was set to 0.45 MPa (HDT 0.45 MPa) and a case where the bending stress was set to 1.80 MPa (HDT 1.80 MPa) .

### [Moldability (Molding Shrinkage Rate)]

A test piece that was 120 mm in length, 130 mm in width and 3 mm in thickness was fabricated by injection molding by the same method as described above, and dimensional changes of the sizes (the lengths in the length direction and in the width direction) of the test piece three days after the molding with respect to the sizes (the lengths in the length direction and in the width direction) of the mold were calculated and used to evaluate the moldability. Specifically, the molded body (test piece) after the injection molding was removed from the mold and left still at room temperature for three days, and differences between the lengths of each side in the length direction and in the width direction of the test piece and the lengths of each side in the length direction and in the width direction of the injection mold were then measured at each of the four sides. For each of the four sides, the percentage of the proportion of the difference with respect to the length of the side of the mold was obtained, and the average value of these percentages was regarded as the molding shrinkage rate. The molding shrinkage rate in the length direction was represented by the shrinkage rate MD, and the molding shrinkage rate in the width direction was represented by the shrinkage rate TD.

### [Slidability (Dynamic Friction Coefficient) and Wear Resistance (Specific Wear Amount)]

A test piece that was 120 mm in length, 130 mm in width and 3 mm in thickness fabricated by the same method as described above was blanked, thereby fabricating a test piece that was 30 mm in length, 30 mm in width and 3 mm in thickness. The dynamic friction coefficient and the specific wear amount were measured using this test piece and a Matsubara-type friction and wear tester according to JIS K7218 "Testing Methods for Sliding Wear Resistance of Plastics - A Method."

Regarding the testing conditions, S45C was used as a mating material, the rate was set to 50 cm/second, the distance was set to 3 km, the load was set to 15 kg, and the measurement environment temperature was set to 23°C.

### [Tensile Strength at Break, Tensile Elongation at Break and Tensile Modulus]

According to ISO 527-1,2, the shape of the test piece was made into a shape described in JIS K7162 1A, the tensile rate was set to 50 mm/minute, and the tensile strength at break and the tensile elongation at break were obtained. In addition, according to ISO 527-1,2, the shape of the test piece was made into a shape described in JIS K7162 1A, the tensile rate was set to 1 mm/minute, and the tensile modulus was obtained.

### [Bending Strength and Bending Elastic Modulus]

### <Fabrication of JIS K7162 1A Test Piece>

The composition obtained in each of Examples and Comparative Examples was injected into the hopper portion of the "EC-75SXIII type molding machine" manufactured by Shibaura Machine Co., Ltd., melted at 230°C and injection-molded into the mold, thereby fabricating a JIS K7162 1A test piece. The temperature of the mold was set to 50°C to 70°C, the injection pressure was set to 80 to 120 MPa, and the dwelling was set to 60 to 90 MPa. Here, only in the case of the composition obtained in Comparative Example 1, the injection pressure was set to 70 to 90 MPa, and the dwelling was set to 25 to 45 MPa.

### <Measurement of Bending Strength and Bending Elastic Modulus>

The bending strength and the bending elastic modulus were obtained using the JIS K7162 1A test piece according to ISO 178 with the shape of the test piece set to be 80 mm (in length), 10 mm (in width) and 4 mm (in thickness), the span distance set to 64 mm and the testing rate set to 2 mm/minute.

### [Bending Fatigue Test]

### <Fabrication of ASTM D671 Type A Test Piece>

The composition obtained in each of Examples and Comparative Examples was injected into the hopper portion of the "EC-75SXIII type molding machine" manufactured by Shibaura Machine Co., Ltd., melted at 230°C and injection-molded into the mold, thereby fabricating a ASTM D671 type A test piece. The temperature of the mold was set to 30°C to 50°C, the injection pressure was set to 90 to 110 MPa, and the dwelling was set to 55 to 65 MPa.

### <Measurement of Number of Times of Vibration Fatigue>

The ASTM D671 type A test piece was set in a "B70 type repeated vibration fatigue tester" manufactured by Toyo Seiki Seisaku-sho, Ltd., and a vibration fatigue test was performed under conditions of room temperature, a frequency of 30 Hz and a pressure of 35 MPa. The number of repetitions when the displacement amount reached 8 mm was obtained as the fatigue resistance (times).

### [Raw Materials]

Raw materials used in Examples and Comparative Examples are as described below.

### (Ethylene-Based Polymer Component (AI))

### <<Production of Ethylene-Based Polymer Component (AI-1)>>

An ultra-high-molecular-weight ethylene-based polymer (polymer (a1)) having an intrinsic viscosity [η] of 30 dl/g was generated by polymerization in a first stage of two-stage polymerization, and a low-molecular-weight ethylene-based polymer (polymer (a2)) having an intrinsic viscosity [η] of 1.5 dl/g were then generated by polymerization in a second stage, in a mass ratio (polymer (a1)/polymer (a2)) of 41/59, to obtain an ethylene-based polymer component (AI-1) having an intrinsic viscosity [η] of 4.4 dl/g, according to the conventional method.

### <<Production of Ethylene-Based Polymer Component (AI-2) »

An ultra-high-molecular-weight ethylene-based polymer (polymer (a1)) having an intrinsic viscosity [η] of 30 dl/g was generated by polymerization in a first stage of two-stage polymerization, and a low-molecular-weight ethylene-based polymer (polymer (a2)) having an intrinsic viscosity [η] of 1.5 dl/g were generated by polymerization in a second stage, in a mass ratio (polymer (a1)/polymer (a2)) of 75/25, to obtain an ethylene-based polymer component (AI-2) having an intrinsic viscosity [η] of 6.9 dl/g, according to the conventional method.

### (Ethylene-Based Polymer Component (AII))

The following ethylene-based polymer component was used.

Ethylene-based polymer component (AII-1): A high-density low-molecular-weight polyethylene having an intrinsic viscosity [η] of 1.1 dl/g and a density of 965 kg/m³ ("HI-ZEX 1700J" manufactured by Prime Polymer Co., Ltd.)

### (Ethylene-Based Polymer Component (A))

### <<Production of Ethylene-Based Polymer Component (A-1)>>

An ethylene-based polymer component (AI-1) and an ethylene-based polymer component (AII-1) were blended in proportions at which the mass ratio ((AI-1)/(AII-1)) reached 49/51 and melt-blended using a PCM twin screw extruder manufactured by Ikegai Co., Ltd., thereby obtaining an pellet-like ethylene-based polymer component (A-1) having an intrinsic viscosity [η] of 3.0 dl/g and a density of 968 kg/m³. The proportion of the ultra-high-molecular-weight ethylene-based polymer (polymer (a1)) in the ethylene-based polymer component (A-1) was 20 mass%.

### <<Production of Ethylene-Based Polymer Component (A-2)>>

An ethylene-based polymer component (AI-2) and an ethylene-based polymer component (AII-1) were blended in proportions at which the mass ratio ((AI-2)/(AII-1)) reached 33/67 and melt-blended using a PCM twin screw extruder manufactured by Ikegai Co., Ltd., thereby obtaining an pellet-like ethylene-based polymer component (A-2) having an intrinsic viscosity [η] of 5.8 dl/g and a density of 966 kg/m³. The proportion of the ultra-high-molecular-weight ethylene-based polymer (polymer (a1)) in the ethylene-based polymer component (A-2) was 25 mass%.

### (Carbon Fibers (B))

The following carbon fibers were used.
Carbon fibers (B-1): "TENAX HT P802" manufactured by Teijin Limited (polyolefin-based polymer sizing treatment, fiber lengths: 3 mm, diameters: 7 um, proportion of carbon fiber component: 98 mass%)
Carbon fibers (B-2): "TENAX HT C605" manufactured by Teijin Limited (nylon-based polymer sizing treatment, fiber lengths: 6 mm, diameters: 7 um, proportion of carbon fiber component: 95.5 mass%)
Carbon fibers (B-3): "TORAYCA T008-006" manufactured by Toray Industries, Inc. (epoxy-based polymer sizing treatment, fiber lengths: 6 mm, diameters: 7 um, proportion of carbon fiber component: 99 mass%)

### (Other Carbon-Based Fillers)

The following carbon nanotube was used.
Carbon nanotube: "NC7000" manufactured by Nanocyl SA (average diameter: 9.5 nm, average length: 1.5 µm)

### <<Fabrication of Carbon Nanotube Masterbatch>>

15 mass% of the carbon nanotube, 75 mass% of the ethylene-based polymer component (A-1) and 10 mass% of wax (polyethylene-based wax) were mixed together by an existing method, thereby fabricating a carbon nanotube-containing masterbatch.

### (Modified Olefin-Based Polymer (C))

The following modified olefin-based polymers were used as compatibilizers.

Modified olefin-based polymer (C-1): Maleic acid-modified ethylene-based polymer (density: 965 kg/m³, MFR (190°C, load of 2.16 kg): 5 g/10 minutes, degree of modification: 2.4) produced based on a method for producing an ethylene-based polymer PE-0 described in Paragraphs [0042] and [0043] of WO2019/208169

Modified olefin-based polymer (C-2): Maleic acid-modified ethylene-based polymer (density: 967 kg/m³, intrinsic viscosity [η] of 5 dl/g [η], MFR (190°C, 10 kg): 6.2, degree of modification: 0.8) produced based on a method for producing a modified polyolefin composition described in Paragraph [0083] of JP2019-218568

### [Example 1]

The ethylene-based polymer component (A-1), the carbon fibers (B-1) and the modified olefin-based polymer (C-1) were dry-blended in proportions of 78 mass%, 20 mass% and 2 mass%, respectively, and melt extrusion was performed using a twin screw kneading extruder "HK-25D" manufactured by Parker Corporation under conditions of a cylinder temperature of 260°C, a screw rotation rate of 200 rpm and a discharge amount of 12 kg/h, thereby obtaining a composition. The amount of each component blended in the obtained composition (provided that the total amount of the ethylene-based polymer was set to 100 parts by mass) is shown in Table 1. In addition, the physical properties of the obtained composition were measured by the above-described methods. The results are shown in Table 1.

### [Example 2]

A composition was produced in the same manner as in Example 1 except that the composition was prepared by blending the ethylene-based polymer component (A-1), the carbon fibers (B-1) and the modified olefin-based polymer (C-1) in amounts shown in Table 1, and the physical properties thereof were measured. The results are shown in Table 1.

### [Example 3]

A composition was produced in the same manner as in Example 1 except that the composition was prepared using the modified olefin-based polymer (C-2) instead of the modified olefin-based polymer (C-1) by blending the ethylene-based polymer component (A-1), the carbon fibers (B-1) and the modified olefin-based polymer (C-2) in amounts shown in Table 1, and the physical properties thereof were measured. The results are shown in Table 1.

### [Example 4]

A composition was produced in the same manner as in Example 1 except that the composition was prepared using the ethylene-based polymer component (A-2) instead of the ethylene-based polymer component (A-1) by blending the ethylene-based polymer component (A-2), the carbon fibers (B-1) and the modified olefin-based polymer (C-1) in amounts shown in Table 1, and the physical properties thereof were measured. The results are shown in Table 1.

### [Example 5]

A composition was produced in the same manner as in Example 1 except that the composition was prepared using the carbon fibers (B-2) instead of the carbon fibers (B-1) by blending the ethylene-based polymer component (A-1), the carbon fibers (B-2) and the modified olefin-based polymer (C-1) in amounts shown in Table 1, and the physical properties thereof were measured. The results are shown in Table 1.

### [Example 6]

A composition was produced in the same manner as in Example 1 except that the composition was prepared using the carbon fibers (B-3) instead of the carbon fibers (B-1) by blending the ethylene-based polymer component (A-1), the carbon fibers (B-3) and the modified olefin-based polymer (C-1) in amounts shown in Table 1, and the physical properties thereof were measured. The results are shown in Table 1.

### [Comparative Example 1]

A composition was produced in the same manner as in Example 1 except that the composition was prepared using the ethylene-based polymer component (AII-1) instead of the ethylene-based polymer component (A-1) by blending the ethylene-based polymer component (AII-1), the carbon fibers (B-1) and the modified olefin-based polymer (C-1) in amounts shown in Table 1, and the physical properties thereof were measured. The results are shown in Table 1.

### [Comparative Example 2]

A composition was produced in the same manner as in Example 1 except that the carbon fibers (B-1) and the modified olefin-based polymer (C-1) were not used and only the ethylene-based polymer component (A-1) was used, and the physical properties thereof were measured. The results are shown in Table 1.

### [Comparative Example 3]

The ethylene-based polymer component (A-2) and the carbon nanotube masterbatch were dry-blended in proportions of 40 mass% and 60 mass%, respectively, and melt extrusion was performed using a twin screw kneading extruder "HK-25D" manufactured by Parker Corporation under conditions of a cylinder temperature of 260°C, a screw rotation rate of 200 rpm and a discharge amount of 12 kg/h, thereby obtaining a composition. The amount of each component blended in the composition (provided that the total amount of the ethylene-based polymer was set to 100 parts by mass) is shown in Table 1. In addition, the physical properties of the obtained composition were measured by the above-described methods. The results are shown in Table 1.

**[Table 1]**

| | | | | Example 1 | Example 2 | Example 3 | Example 4 | Example 5 |
|---|---|---|---|---|---|---|---|---|
| Blending | Ethylene-based polymer component (A) | | Kind | A-1 | A-1 | A-1 | A-2 | A-1 |
| | | | kg/m³ | 968 | 968 | 968 | 966 | 968 |
| | | | Parts by mass | 100 | 100 | 100 | 100 | 100 |
| | Carbon fibers (B) | | Kind | B-1 | B-1 | B-1 | B-1 | B-2 |
| | | | Parts by mass | 25.1 | 43.2 | 25.1 | 25.1 | 24.5 |
| | Carbon nanotube | | Parts by mass | - | - | - | - | - |
| | Wax | | Parts by mass | 0.0 | 0.0 | 0.0 | 0.0 | 0.0 |
| | Modified olefin-based polymer (C) | | Kind | C-1 | C-1 | C-2 | C-1 | C-1 . |
| | | | Parts by mass | 2.6 | 2.9 | 2.6 | 2.6 | 2.6 |
| Physical properties | Density | Density of composition | kg/m³ | 1020 | 1040 | 1050 | 1020 | 1040 |
| | Fibers | Average fiber length | µm | 330 | 201 | 315 | 267 | 332 |
| | | Proportion of 100 to 300 µm | % | 46 | 91 | 52 | 68 | 48 |
| | Orientation | Proportion of acicular ratio of 1.5 or more | % | 45.2 | 32.8 | 44.5 | 52.5 | 40.4 |
| | Conductivity | Surface resistivity | Ω/cm | 8.7E+02 | 3.1E+01 | 1.1E+03 | 6.3E+02 | 3.8E+03 |
| | | Volume resistivity | Ω·cm | 2.6E+02 | 9.0E+00 | 3.3E+02 | 1.9E+02 | 1.1E+03 |
| | Heat resistance | HDT 0.45 MPa | °C | 129 | 130 | 129 | 129 | 129 |
| | | HDT 180 MPa | °C | 116 | 120 | 116 | 115 | 114 |
| | Moldability | Shrinkage rate MD | % | 0.29 | 0.18 | 0.27 | 0.3 | 0.32 |
| | | Shrinkage rate TD | % | 0.13 | 0.22 | 0.13 | 0.14 | 0.17 |
| | Slidability | Dynamic friction coefficient | µd | 0.20 | 0.17 | 0.22 | 0.22 | 0.22 |
| | Wear resistance | Specific wear amount | 10^⁻³ mm³/kgf·km | 56 | 32 | 32 | 20 | 60 |
| | Stiffness | Tensile strength at break | MPa | 66 | 70 | 70 | 60 | 60 |
| | | Tensile elongation at break | % | 1.4 | 1.2 | 1.5 | 1.3 | 1.2 |
| | | Tensile modulus | MPa | 9099 | 12336 | 9404 | 9145 | 9080 |
| | | Bending strength | MPa | 90 | 100 | 90 | 90 | 85 |
| | | Bending elastic modulus | MPa | 10150 | 14500 | 10000 | 10600 | 10400 |
| | Fatigue resistance | Vibration fatigue count | Times | 5520 | 159000 | 11110 | 12500 | 2000 |

**Table 1 (continued)**

| | | | | Example 6 | Comparative Example 1 | Comparative Example 2 | Comparative Example 3 |
|---|---|---|---|---|---|---|---|
| Blending | Ethylene-based polymer component (A) | | Kind | A-1 | All-1 | A-1 | A-2 |
| | | | kg/m³ | 968 | 965 | 968 | 968 |
| | | | Parts by mass | 100 | 100 | 100 | 100 |
| | Carbon fibers (B) | | Kind | B-3 | B-1 | - | - |
| | | | Parts by mass | 25.4 | 25.1 | - | - |
| | Carbon nanotube | | Parts by mass | - | - | - | 10.6 |
| | Wax | | Parts by mass | 0.0 | 0.0 | 0.0 | 7.1 |
| | Modified olefin-based polymer (C) | | Kind | C-1 | C-1 | - | - |
| | | | Parts by mass | 2.6 | 2.6 | - | - |
| Physical properties | Density | Density of composition | kg/m³ | 1020 | 1040 | 960 | 1000 |
| | Fibers | Average fiber length | µm | 271 | 300 | N.D. | <100 |
| | | Proportion of 100 to 300 µm | % | 64 | 61 | N.D. | 0 |
| | Orientation | Proportion of acicular ratio of 1.5 or more | % | 58.2 | 51.3 | N.D. | 0 |
| | Conductivity | Surface resistivity | Ω/cm | 4.2E+04 | 8.1E+01 | 9.7E+16 | 5.7E+06 |
| | | Volume resistivity | Ω·cm | 1.3E+04 | 2.4E+01 | 2.1E+17 | 2.9E+03 |
| | Heat resistance | HDT 0.45 MPa | °C | 127 | 130 | 77 | 78 |
| | | HDT 180 MPa | °C | 105 | 123 | 50 | 51 |
| | Moldability | Shrinkage rate MD | % | 0.48 | 0.16 | 2.9 | 2.7 |
| | | Shrinkage rate TD | % | 0.22 | 0.16 | 1.9 | 2.2 |
| | Slidability | Dynamic friction coefficient | µd | 0.33 | 0.20 | 0.17 | 0.19 |
| | Wear resistance | Specific wear amount | 10^⁻³ mm³/kgf·km | 80 | 320 | 220 | 110 |
| | Stiffness | Tensile strength at break | MPa | 60 | 75 | 30 | 40 |
| | | Tensile elongation at break | % | 1.6 | 1.6 | 19 | 12 |
| | | Tensile modulus | MPa | 7690 | 11402 | 1241 | 1585 |
| | | Bending strength | MPa | 80 | 100 | 30 | 40 |
| | | Bending elastic modulus | MPa | 8800 | 11100 | 130 | 1770 |
| | Fatigue resistance | Vibration fatigue count | Times | 1500 | 28000 | <1000 | <1000 |

## Claims

1. An ethylene-based polymer composition comprising:
100 parts by mass of an ethylene-based polymer component (A) having an intrinsic viscosity [η] measured in a decalin solvent at 135°C of 1.5 to 10 dl/g and a density of 930 to 980 kg/m³; and
1 to 100 parts by mass of carbon fibers (B),
wherein the ethylene-based polymer component (A) contains an ultra-high-molecular-weight ethylene-based polymer (a1) having an intrinsic viscosity [η] measured in a decalin solvent at 135°C of 10 to 40 dl/g.

2. The ethylene-based polymer composition according to claim 1, wherein the ethylene-based polymer component (A) contains a low-molecular-weight or high-molecular-weight ethylene-based polymer (a2) having an intrinsic viscosity [η] measured in a decalin solvent at 135°C of 0.1 to 9 dl/g.

3. The ethylene-based polymer composition according to claim 2, wherein the ethylene-based polymer component (A) contains 10 to 90 mass% of an ethylene-based polymer component (AI) and 90 to 10 mass% of an ethylene-based polymer component (AII) (based on 100 mass% of a total amount of the component (AI) and the component (AII)),
the ethylene-based polymer component (AI) is a multistage polymer containing more than 35 mass% and 90 mass% or less of the ultra-high-molecular-weight ethylene-based polymer (a1) and 10 mass% or more and less than 65 mass% of the low-molecular-weight or high-molecular-weight ethylene-based polymer (a2) (based on 100 mass% of a total amount of the polymer (a1) and the polymer (a2)), and
the ethylene-based polymer component (AII) contains an ethylene-based polymer (a3) having an intrinsic viscosity [η] measured in a decalin solvent at 135°C of 0.1 to 2.9 dl/g.

4. The ethylene-based polymer composition according to claim 3, wherein the ethylene-based polymer component (AI) is obtained by a multistage polymerization method comprising a step of generating the ultra-high-molecular-weight ethylene-based polymer (a1) and a step of generating the low-molecular-weight or high-molecular-weight ethylene-based polymer (a2).

5. The ethylene-based polymer composition according to any one of claims 1 to 4, wherein the carbon fibers (B) are surface-treated carbon fibers.

6. The ethylene-based polymer composition according to claim 5, wherein a surface treatment of the carbon fibers (B) is a sizing treatment using an olefin-based polymer, a urethane-based polymer, a nylon-based polymer or an epoxy-based polymer.

7. The ethylene-based polymer composition according to any one of claims 1 to 6, wherein an average fiber length of the carbon fibers (B) extracted from the ethylene-based polymer composition is 100 um or longer and 400 um or shorter.

8. The ethylene-based polymer composition according to any one of claims 1 to 7, wherein a proportion of a carbon fiber having a fiber length of 100 um or longer and 300 um or shorter in the carbon fibers (B) extracted from the ethylene-based polymer composition is 30% or more.

9. The ethylene-based polymer composition according to any one of claims 1 to 8, further comprising a modified olefin-based polymer (C).

10. The ethylene-based polymer composition according to any one of claims 1 to 9, wherein a content of the carbon fibers (B) based on 100 parts by mass of the ethylene-based polymer component (A) is 20 to 60 parts by mass.

11. A molded body comprising the ethylene-based polymer composition according to any one of claims 1 to 10.

12. The molded body according to claim 11, wherein a proportion of a carbon fiber having an acicular ratio of 1.5 or more in the carbon fibers (B) that are contained in the molded body is 30% or more.

13. The molded body according to claim 11 or 12, wherein shrinkage rates of the molded body in a length direction and in a width direction are both 2.0% or less.

14. The molded body according to any one of claims 11 to 13, wherein a bending elastic modulus of the molded body is 5000 MPa or more.

15. The molded body according to any one of claims 11 to 14, wherein the number of repetitions when a displacement amount reaches 8 mm in a vibration fatigue test (35 MPa) of the molded body is 1500 times or more.

16. The molded body according to any one of claims 11 to 15 wherein the molded body is an injection molded body.

17. The molded body according to any one of claims 11 to 16 wherein the molded body is a covering material or a sliding material.
